# EUROPÄISCHE PATENTSCHRIFT

(11) **EP 0 370 009 B1**
(45) Veröffentlichungstag und Bekanntmachung des Hinweises auf die Patenterteilung: **21.07.1993**
(21) Anmeldenummer: 88902440.2
(22) Anmeldetag: 03.03.1988
(51) Int. Cl.: H02B 15/02

(54) **LEITWARTE**
MASTER CONTROL FACILITY
SALLE DE CONTROLE

(30) Priorität: 21.03.1987 DE 3709400
(43) Veröffentlichungstag der Anmeldung: 30.05.1990
(73) Patentinhaber: SUBKLEW GMBH, D-51149 Köln (DE)
(72) Erfinder: SUBKLEW, Christof, D-5000 Köln 91 (DE); NEUMANN, Ewald, D-5204 Lohmar (DE)
(74) Vertreter: Wolf, Eckhard, Dr.-Ing.
(86) Internationale Anmeldenummer: EP8800156
(87) Internationale Veröffentlichungsnummer: WO8807779

(56) Entgegenhaltungen:
- DE-A- 1 951 044
- DE-A- 2 328 838
- GB-A- 1 034 301
- US-A- 4 605 303

## Beschreibung

Die Erfindung betrifft eine Leitwarte zur Überwachung von Funktionsabläufen mit einer vorzugsweise aus Mosaikbausteinen zusammengesetzten Bildtafel zur visuellen Darstellung eines stationären Funktionsschemas und von Funktionszuständen in räumlicher Zuordnung innerhalb des Funktionsschemas.

Eine Leitwarte ist eine zentrale Kommandostelle einer Anlage mit mehr oder weniger komplizierten Funktionszusammenhängen, von der aus Funktionsabläufe, die Befolgung vorgeschriebener Funktionsprogramme und die Einhaltung von Grenzwerten überwacht und gesteuert werden. Größere Leitwarten enthalten neben mindestens einem Steuerpult, das die Steuerorgane enthält und an dem der Schaltmeister seinen Platz hat, eine vertikal aufgebaute Bildtafel zur visuellen Darstellung eines stationären Funktionsschemas und von Funktionszuständen in räumlicher Zuordnung innerhalb des Funktionsschemas.

Leitwarten dieser Art werden überall dort eingesetzt, wo komplizierte Funktionszusammenhänge bestehen, die eine zentrale Überwachung notwendig machen. Insbesondere findet man Seitwarten in Kraftwerken, insbesondere Kernkraftwerken, in Anlagen der Schwerindustrie und der chemischen Industrie, im Bergbau und in modernen Fertigungsanlagen des Maschinen- und Kraftwerkbaus. Die Bildtafel enthält hierbei eine zweidimensionale flächige oder perspektivische schematische Nachbildung der Prozeß- bzw. Fertigungszusammenhänge unter Verwendung geeigneter Sinnbilder für Prozeßräume bzw. Fertigungsstationen und der vorhandenen Verbindungsleitungen und -wege, Ventile, Weichen und dergleichen. Auf der Bildtafel befinden sich ferner Meßwertanzeigen, die ihre Meßstellen am tatsächlichen Prozeßort haben und die im Funktionsschema örtlich richtig angeordnet sein können. Weiter können auf der Bildtafel an kritischen Stellen des Schemas Meldungen, insbesondere auch Laufmeldungen durch selbstleuchtende optische Signale dargestellt werden. Jede eingehende Meldung kann außerdem auch akustisch angezeigt werden, damit sie vom Schaltmeister nicht übersehen wird.

Ein weiterer Einsatzbereich für Leitwarten sind die Schaltwarten, die Netzbefehlstellen und die Hauptkommandostellen der Energieversorgungsunternehmen, von denen aus die Stromerzeugung und -Verteilung technisch und betriebswirtschaftlich überwacht und gesteuert sowie die Fahrpläne der angeschlossenen Kraftwerke festgesetzt und die Ausnutzung von Fremdstrombezug und die Zusammenarbeit mit verbundenen anderen Anlagen bestimmt werden. Die Bildtafel, die hier auch Schalttafel, Schaltwand oder Verteiltafel genannt wird, enthält als Funktionsschema ein Schaltbild oder ein Netzbild in Form einer schematischen Nachbildung der Schaltanlage oder des Netzes. Außerdem werden wiederum Funktionszustände an kritischen Stellen durch Meßwerte und Leuchtanzeigen dargestellt.

Ein dritter Anwendungsbereich der Leitwarten besteht in der Verkehrsüberwachung auf Straße, Schiene, Wasser und in der Luft, bei Feuerwehr- und Polizeieinsätzen, und in den Krisenstabzentralen für Notstandseinsätze sowie den militärischen Befehlszentralen. Die Bildtafeln enthalten hier vor allem geographische Darstellungen mit Straßen- bzw. Liniennetz, Kreuzungen, Ländergrenzen und dergleichen als Funktionsschema sowie Verkehrsführungen in Form von Ampel- oder Weichenstellungen und Informationen zur Verkehrsdichte als Funktionszustände in räumlicher Zuordnung innerhalb des Funktionsschemas.

Zur Überwachung von komplizierten Funktionsabläufen ist es bei Leitwarten mit einem Mosaikprojektionsfeld an sich bekannt (DE-A1-1951044), auf das Mosaikprojektionsfeld ein Blindschaltbild eines gewünschten Anlagenteils zu projizieren, während gleichzeitig von einer Fernwirkanlage der Betriebszustand des Anlageteils auf das Mosaikprojektionsfeld übertragen wird. Die Projektion der Blindschaltbilder erfolgt durch beliebig austauschbare Diapositive über einen automatischen, elektronisch ansteuerbaren Diaprojektor. Mit einer derartigen Anordnung lassen sich jedoch nur statische, bereits zuvor festgelegte Schaltbilder darstellen. Eine Veränderung des visuell wahrnehmbaren Bildes oder eines Teiles davon in unmittelbarer Reaktion auf sich verändernde Reaktionsabläufe oder -zustände ist damit nicht möglich.

Weiter ist es bei einer Leitwarte mit einem auf einer Bildtafel angezeigten Funktionsschema an sich bekannt (GB-A 1 034 301), die Funktionszustände einer zu überwachenden Anlage mit Hilfe von auf die Bildtafel projizierten, verschieden ausrichtbaren Lichtpunkten anzuzeigen. Jedoch lassen sich auch mit dieser Anordnung nur statische Zusammenhänge zwischen Funktionsschema und Funktionszustand darstellen.

Der Erfindung liegt die Aufgabe zugrunde, die bekannten Leitwarten dahingehend zu verbessern, daß auf der Bildtafel in räumlicher Zuordnung zum stationären Funktionsschema beliebige, räumlich und zeitlich veränderbare Bildinformationen dargestellt werden können.

Zur Lösung dieser Aufgabe wird die im Patentanspruch 1 angegebene Merkmalskombination vorgeschlagen. Weitere vorteilhafte Ausgestaltungen und Weiterbildungen ergeben sich aus den abhängigen Ansprüchen.

Der erfindungsgemäßen Lösung liegt vor allem der Gedanke zugrunde, daß an beliebigen Stellen der Bildtafel auch innerhalb des Funktionsschemas punktförmige, linienförmige oder flächenhafte Bilder darstellbar sind, mit denen Funktionszusammenhänge, -zustände und -abläufe veranschaulicht werden können und die allein mit der bisher verwendeten Mosaik- und Projektionstechnik nicht oder nur mit sehr großem Schaltungsaufwand erzeugbar sind. Um dies zu erreichen, wird gemäß der Erfindung vorgeschlagen, daß mindestens ein Laserstrahl erzeugt wird, der mittels einer elektronisch ansteuerbaren Ablenkvorrichtung unter Erzeugung eines dem Funktionsschema überlagerten, für das menschliche Auge stehend oder bewegt erscheinenden punktförmigen, linienförmigen oder flächenhaften Bildes mit definierter Frequenz wiederholt auf eine Vielzahl beliebig vorgebbarer Auftreffpunkte auf der Bildtafeloberfläche zeitlich aufeinanderfolgend ausrichtbar und an diesen unter Erzeugung des visuell wahrnehmbaren Bildes in im wesentlichen diffus reflektiertes und emittiertes Licht umsetzbar ist.

Als Quelle zur Erzeugung eines ausreichend energiereichen Lichtstrahlenbündels ein Laser, insbesondere ein Argon-Ionen-Laser, Helium-Neon-Laser, Helium-Kadmium-Laser, Alexandrid-Laser oder ein Ecimer-Laser. Zur Ausrichtung des Lichtstrahlenbündels werden im Strahlengang innerhalb der Ablenkvorrichtung zweckmäßig optische Mittel verwendet, die durch die Ansteuerelektronik in ihrer optischen Dichte und damit in ihrem Ablenkvermögen in der zur Erzeugung des Bildes erforderlichen Weise beeinflußbar sind. Elektrooptische Systeme dieser Art sind als solche bekannt (vgl. insbesondere Aufsatz Philip D. Henshaw "Laser beamsteering using the photorefractive effect" in Applied Optics 1982, 2323-2325 und Aufsatz "Akustooptische Deflektoren" in Katalog Laser und Laser-Zubehör 1979/80 der Firma LASER-OPTRONIC, München, Seite 69-73).

Eine andere Möglichkeit besteht darin, daß die Ablenkvorrichtung einen durch die Ansteuerelektronik in seiner Ausrichtung verstellbaren Spiegel oder ein entsprechendes Prisma aufweist. Der Spiegel oder das Prisma können dabei beispielsweise mit Hilfe von zwei oder drei im Abstand voneinander angeordneten, durch die Ansteuerelektronik ansteuerbaren Piezokristallen in ihrer räumlichen Ausrichtung verstellt werden. Grundsätzlich kann die Verstellung des Spiegels oder des Prismas auch mit elektromagnetischen Mitteln, insbesondere nach dem Galvanometerprinzip, vorgenommen werden.

Zur Umsetzung des Laserstrahls in eine Lichtemission kann die Oberfläche der Bildtafel bzw. der die Bildtafel bildenden Mosaikbausteine mit einem durch die Energiestrahlen zur Lichtemission anregbaren Lumineszenzmaterial beschichtet werden. Das Lumineszenzmaterial enthält vorteilhafterweise einen Fluoreszenzfarbstoff, der durch sichtbares Licht oder durch UV-Licht anregbar ist. Wenn das Lumineszenzmaterial zusätzlich eine phosphoreszierende Wirkung mit einer Nachleuchtzeit von etwa 0,5 bis 20 Sekunden aufweist, kann die notwendige Wiederholfrequenz bei stehenden oder langsam bewegten Bildern von etwa 20 Hz erheblich herabgesetzt werden, so daß auch relativ träge Ablenkvorrichtungen mit mechanischen Spiegel- und Prismensystemen zum Einsatz gebracht werden können.

Die mit dem Laserstrahl auf die Bildtafel zu übertragende Bildinformation liegt vorteilhafterweise in digitalisierter Form vor, so daß sie im Arbeitsspeicher oder einem Massenspeicher eines Mikrocomputers gespeichert, im Computer verarbeitet und auf die Ansteuerelektronik übertragen werden kann. Zur Zwischenspeicherung der Bildinformation kann die Ansteuerelektronik zusätzlich einen digitalen Datenspeicher aufweisen, aus dem die Bildinformation mit vorgegebener Wiederholfrequenz auslesbar und über einen Signalumformer mit Digital/Analogwandler in Steuersignale für die Ausrichtung der Energiestrahlen umsetzbar ist. Der digitale Zwischenspeicher kann dabei als Schreiblese-Speicher (RAM) ausgebildet sein, der über den Rechner mit den Bildinformationen beaufschlagt werden kann. Für die Erzeugung gleichbleibender Bilder kann die Bildinformation auch in einem vorprogrammierten Lesespeicher (EPROM) untergebracht werden, in welchem einzelne Speicherbereiche zur Erzeugung unterschiedlicher Bilder abgegrenzt und beispielsweise über den Rechner angesteuert werden können.

Gemäß einer vorteilhaften Ausgestaltung der Erfindung werden die Auftreffpunkte des Strahlenbündels auf der Bildtafel auf einer Bahnkurve mit vorgegebener Bahngeschwindigkeit bewegt, wobei die Bahnkurve als eine Folge von im Abstand voneinander angeordneten Stützpunkten vorgegeben ist und der Auftreffpunkt zwischen jeweils zwei benachbarten Stützpunkten auf einer die Stützpunkte verbindenen, vorzugsweise als Gerade ausgebildeten Linie bewegbar ist. Die Koordinatenwerte der Stützpunkte und gegebenenfalls weitere den Stützpunkten zugeordnete Bildparameter können dabei in dem digitalen Datenspeicher gespeichert und von dort durch den Rechner oder die Ansteuerelektronik abgerufen werden. Als weitere Bildparameter kommen u.a. ein Richtungsvektor oder ein Bahngeschwindigkeitswert auf die Bahnkurve in Betracht. Diese Parameter sind neben den Koordinatenwerten der Stützpunkte notwendig, um die Bahnkurve mit einfachen elektronischen Mitteln ohne Zuhilfenahme eines Mikroprozessors oder des Rechners zu erzeugen. Weitere Bildparameter, die stützpunktweise gespeichert und abrufbar sein sollten, können der Intensitätswert, der Farbwert und/oder der Fokussionswert des Bildes im Bereich der einzelnen Stützpunkte sein.

Der Rechner und/oder die Ansteuerelektronik können auch mit Signalen aus einer Eingabeeinheit und/oder von einem Leitrechner beaufschlagt werden, die mit Hilfe der Rechner-Software und/oder über die Ansteuerelektronik in Bildinformationen und -signale umwandelbar und auf die Bildtafel unter Erzeugung eines entsprechenden Bildes übertragbar sind. Auf diese Weise lassen sich variable Bildinformationen koordinatengerecht in das Funktionsschema übertragen.

Neben Punkten, Linien und Flächenbereichen können auch Symbole, wie Buchstaben und Zeichen, Diagramme sowie analoge oder digitale Meßinformationen durch den Laserstrahl auf der Bildtafel dargestellt werden. Die Informationen können ein- oder mehrfarbig sein. Auch eine Mischung der emittierten Farben ist möglich.

Neben der reinen Bilddarstellung können mit dem Laserstrahl auch Steuerungsfunktionen ausgelöst werden. Dies kann einmal dadurch erfolgen, daß an vorgegebenen Koordinatenstellen der Bildtafel auf den ankommenden Laserstrahl ansprechende Sensoren angeordnet sind, durch die ein Rückmelde- oder Steuersignal auslösbar ist. Zum anderen läßt sich dieses Ergebnis auch dadurch erzielen, daß durch die bildauslesende bzw. bilderzeugende Software des Rechners ein Rückmelde- oder Steuersignal in Abhängigkeit von der Übereinstimmung bzw. Nichtübereinstimmung der vom Auftreffpunkt des Laserstrahls zu durchlaufenden Bildkoordinaten mit vorgegebenen Vergleichskoordinaten auslösbar ist.

In der Zeichnung ist ein schematisches Ausführungsbeispiel der Erfindung in schematischer Weise dargestellt.

Die einzige Figur zeigt eine Leitwarte mit Steuerpult und Bildtafel in perspektivischer Darstellung.

Die Leitwarte besteht im wesentlichen aus einem Steuerpult 1, einer im Abstand von diesem angeordneten vertikalen Bildtafel 3 sowie einem optischen Scanner 5 zur Erzeugung eines auf die Oberfläche der Bildtafel gerichteten, in seiner Ausrichtung veränderbaren Laserstrahls 7.

Die Bildtafel 3 enthält einen Rahmen 30 auf welchem eine Vielzahl kleiner Mosaikbausteine 32 mit quadratischer Außenfläche unter Erzeugung einer geschlossenen Bildoberfläche aufgesteckt ist. Ein Teil der Mosaikbausteine trägt an seiner Außenfläche Bildelemente in Form von Gravuren oder Aufdrucken, die sich in ihrer Gesamtheit zu einem aus Sinnbildern und Verbindungslinien bestehenden Funktionsschema 34 ergänzen. Das Funktionsschema 34 kann beispielsweise das Netzbilds einer Stromerzeugungs- und Verteilungsanlage, das Prozeßschema einer Chemieanlage oder eines Wasserwerks, das Schema einer automatischen Fertigungsanlage eines Automobilwerks oder die Landkarte mit Verkehrswegen einer Rettungseinsatz- oder Befehlszentrale der Polizei oder des Militärs sein. Auf der Bildtafel können außerdem nichtdargestellte Meßwerte oder Leuchtanzeigen in entsprechender Zuordnung zum Funktionsschema 34 angeordnet werden, mit denen Funktionszustände an kritischen Stellen der zu überwachenden Anlage angezeigt werden können. Auch aktive Schaltelemente, wie Drehschalter, Taster oder Sensoren können an beliebigen Stellen der Byldtafel untergebracht werden. Sowohl die Anzeigeelemente als auch die aktiven Steuerelemente können dabei in die Mosaikbausteine integriert werden.

In dem dargestellten Ausführungsbeispiel sind auf der Bildoberfläche außerdem noch einige Felder 36 in durchgezogenen Linien dargestellt, die auf der Bildtafel 3 nur zeitweilig als kritische Bereiche aufscheinen sollen, wie dies im Falle des Feldes 36' der Fall ist. Die Bereiche 36 und 36' stellen beispielsweise Zuständigkeitsgrenzen auf Landkarten dar, die von einem Einsatzkommando bei Fahndungsmaßnahmen zu berücksichtigen sind. Die Grenzen 36' werden von Fall zu Fall mit Hilfe des durch den Scanner 5 über die Bildoberfläche geführten Energiestrahlenbündels 7 erzeugt.

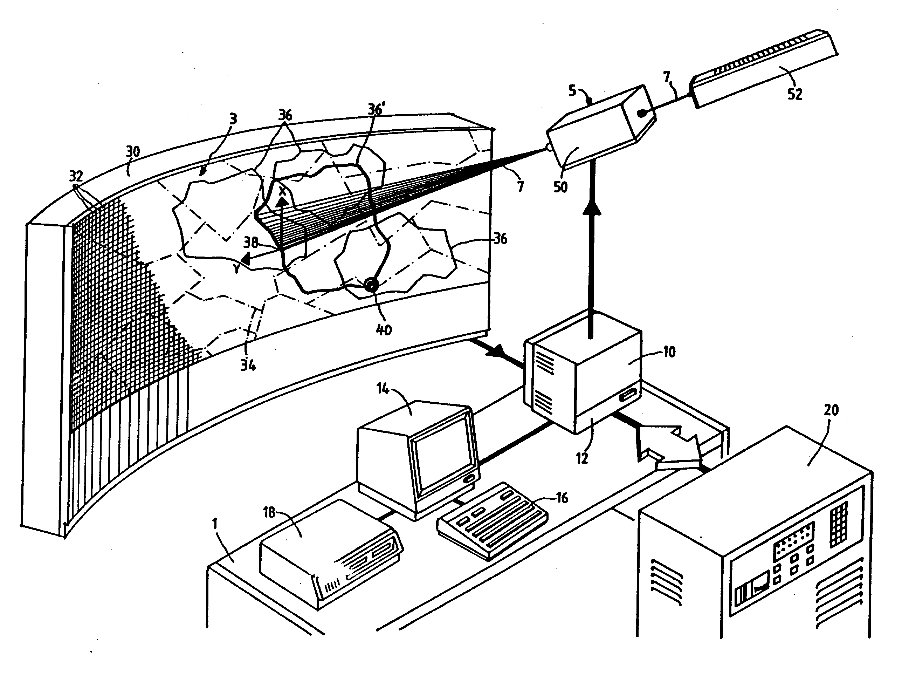

Bei dem Energiestrahlenbündel 7 handelt es sich um einen gebündelten Lichtstrahl, der in einem Laser 52 als Primärlichtstrahl erzeugt und in der optischen Ablenkvorrichtung 50 in der für das zu erzeugende Bild 36' erforderlichen weise abgelenkt wird. Im Strahlengang innerhalb der Ablenkvorrichtung 50 befinden sich nichdargestellte optische Mittel zur Ausrichtung des Laserstrahls 7, die über eine Ansteuerelektronik 10 nach Maßgabe des zu erzeugenden Bildes 36' ansteuerbar sind. Dies kann beispielsweise dadurch erfolgen, daß die optische Dichte der optischen Mittel durch die von der Ansteuerelektronik kommenden Signale in geeigneter Weise beeinflußt wird.

Die Ansteuerelektronik 10 umfaßt einen Mikrocomputer 12, der über ein Bildschirmterminal 14 mit Tastatur 16 und Datenträgerlaufwerk 18 ansteuerbar ist.

Das Bild 36' wird dadurch erzeugt, daß der Laserstrahl 7 an den Auftreffpunkten 38 auf der Bildtafeloberfläche in im wesentlichen diffus reflektiertes oder emittiertes und daher visuell wahrnehmbares Licht umgesetzt wird. Zur Erzeugung eines für das menschliche Auge stehend oder bewegt erscheinenden Bildes wird der Laserstrahl mit definierter Frequenz wiederholt auf eine Vielzahl durch das Bild 36' vorgegebene Auftreffpunkte 38 ausgerichtet.

Das Bild 36' kann dadurch digitalisiert werden, daß die vom Lichtstrahl zu durch laufende Bahnkurve als eine Folge von im Abstand voneinander angeordneten Stützpunkten vorgegeben wird und der Auftreffpunkt zwischen jeweils zwei Stützpunkten auf einer die Stützpunkte verbindenden, vorzugsweise als Gerade ausgebildeten Linie bewegbar ist. Die Koordinatenwerte der Stützpunkte und gegebenenfalls weitere den Stützpunkten zugeordnete Bildparameter können in einem Digitalspeicher gespeichert und von dort durch den Rechner 12 oder die Ansteuerelektronik 10 ausgelesen werden.

Der Rechner 12 kann ferner mit Signalen aus der Eingabeeinheit 16 oder von einem Leitrechner 20 beaufschlagt werden, die mit Hilfe der Rechner-Software oder der Ansteuerelektronik in koordinatengerechte Bildinformationen und -signale umgewandelt und über den Scanner auf die Bildtafel unter Erzeugung eines entsprechenden Bildes übertragen werden können.

Mit dem Laserstrahl können auch Steuerungsfunktionen ausgelöst werden. Dies kann beispielsweise dadurch erfolgen, daß an vorgegebenen Koordinatenstellen der Bildtafel auf den ankommenden Lagerstrahl ansprechende Sensoren 40 angeordnet sind, durch die ein zur Ansteuerelektronik 10 oder zum Rechner 12 führendes Rückmelde- oder Steuersignal auslösbar ist.

## Patentansprüche

1. Leitwarte zur Überwachung von Funktionsabläufen mit einer vorzugsweise aus Mosaikbausteinen (32) zusammengesetzten Bildtafel (3) zur visuellen Darstellung eines stationären Funktionsschemas und von Funktionszuständen in räumlicher Zuordnung innerhalb des Funktionsschemas, sowie mit mindestens einem Laserstrahl (7), der mittels mindestens einer elektronisch ansteuerbaren Ablenkvorrichtung (50) unter Erzeugung eines dem Funktionsschema (34) überlagerten, für das menschliche Auge stehend oder bewegt erscheinenden punktförmigen linienförmigen oder flächenhaften Bildes (36') mit definierter Frequenz wiederholt auf eine Vielzahl beliebig vorgebbarer Auftreffpunkte (38) auf der Bildtafeloberfläche (3) zeitlich aufeinanderfolgend ausrichtbar und an diesen unter Erzeugung des visuell wahrnehmbaren Bildes (36') in im wesentlichen diffus reflektiertes oder emittiertes Licht umsetzbar ist.

2. Leitwarte nach Anspruch 1, **gekennzeichnet durch** einen kontinuierlich oder quasi-kontinuierlich betriebenen Laser (52) als Quelle zur Erzeugung des Laserstrahls.

3. Leitwarte nach Anspruch 1 oder 2, **dadurch gekennzeichnet,** daß im Strahlengang innerhalb der Ablenkvorrichtung (50) durch die Ansteuerelektronik (10) in ihrer optischen Dichte beeinflußbare optische Mittel zur Ausrichtung des Laserstrahls (7) angeordnet sind.

4. Leitwarte nach einem der Ansprüche 1 bis 3, **dadurch gekennzeichnet,** daß die Ablenkvorrichtung (50) einen durch die Ansteuerelektronik in seiner Ausrichtung verstellbaren Spiegel oder ein entsprechendes Prisma aufweist.

5. Leitwarte nach Anspruch 4, **dadurch gekennzeichnet,** daß der Spiegel oder das Prisma mit Hilfe von zwei oder drei im Abstand voneinander angeordneten, durch die Ansteuerelektronik ansteuerbaren Piezokristallen in der räumlichen Ausrichtung verstellbar ist.

6. Leitwarte nach Ansprüche 4, **dadurch gekennzeichnet,** daß der Spiegel oder das Prisma mit vorzugsweise nach dem Galvanometerprinzip arbeitenden elektromagnetischen Mitteln in der räumlichen Ausrichtung verstellbar ist.

7. Leitwarte nach einem der Ansprüche 1 bis 6, **dadurch gekennzeichnet,** daß die Oberfläche der Bildtafel (3) bzw. der die Bildtafel (3) bildenden Mosaikbausteine (32) mit einem durch den Laserstrahl zur Lichtemission anregbaren Lumineszenzmaterial beschichtet ist.

8. Leitwarte nach Anspruch 7, **dadurch gekennzeichnet,** daß das Lumineszenzmaterial eine phosphoreszierende Wirkung mit einer Nachleuchtzeit von 0,5 bis 20 Sekunden aufweist.

9. Leitwarte nach einem der Ansprüche 1 bis 8, **dadurch gekennzeichnet,** daß die mit dem Laserstrahl (7) zu übertragende Bildinformation von einem Digitalspeicher eines Elektronenrechners (12) auf die elektronische Ablenkvorrichtung (50) übertragbar ist.

10. Leitwarte nach einem der Ansprüche 1 bis 9, **dadurch gekennzeichnet,** daß die Ansteuerelektronik (10) einen digitalen Datenspeicher zur Aufnahme der Bildinformationen aufweist und daß die Bildinformationen mit vorgegebener Wiederholfrequenz sequentiell aus dem Datenspeicher auslesbar und über einen Signalumformer mit Digital-Analogwandler in Signale zur Ansteuerung der Ausrichtungsmittel für den Laserstrahl (7) umsetzbar sind.

11. Leitwarte nach einem der Ansprüche 1 bis 10 **dadurch gekennzeichnet,** daß die Auftreffpunkte (38) des Laserstrahls auf der Bildtafel (3) auf einer Bahnkurve (36') mit vorgegebener Bahngeschwindigkeit bewegbar sind, wobei die Bahnkurve (36') als eine Folge von im Abstand voneinander angeordneten Stützpunkten vorgegeben ist und der Auftreffpunkt zwischen benachbarten Stützpunkten auf einer die Stützpunkte verbindenden, vorzugsweise als Gerade ausgebildeten Linie bewegbar ist und wobei die Koordinatenwerte der Stützpunkte und gegebenenfalls weitere den Stützpunkten zugeordnete Bildparameter in einem digitalen Speichermedium gespeichert und von dort durch den Rechner (12) oder die Ansteuerelektronik (10) auslesbar sind.

12. Leitwarte nach Anspruch 11, **dadurch gekennzeichnet,** daß als weitere Bildparameter ein Richtungsvektor und/oder ein Geschwindigkeitswert und/oder ein Intensitätswert und/oder ein Farbwert und/oder ein Fokussionswert des jeweiligen Bildpunktes in dem digitalen Speichermedium gespeichert und von diesem abrufbar sind.

13. Leitwarte nach einem der Ansprüche 9 bis 12, **dadurch gekennzeichnet,** daß der Rechner (12) und/oder die Ansteuerelektronik (10) mit Signalen aus einer Eingabeeinheit (14,16,18) und/oder von einem Leitrechner (20) beaufschlagbar sind, die mittels Rechnersoftware und/oder Ansteuerelektronik (10) in Bildinformationen und -signale umwandelbar und koordinatengerecht auf die Bildtafel (3) unter Erzeugung eines entsprechenden Bildes (36') übertragbar sind.

14. Leitwarte nach einem der Ansprüche 1 bis 13 **dadurch gekennzeichnet,** daß an vorgegebenen Koordinatenstellen der Bildtafel (3) auf den ankommenden Laserstrahl (7) ansprechenden Sensoren angeordnet sind, durch die ein Rückmelde- oder Steuersignal auslösbar ist.

15. Leitwarte nach einem der Ansprüche 9 bis 14, **dadurch gekennzeichnet,** daß durch die bildauslesende bzw. bilderzeugende Software des Rechners (12) ein Rückmelde- oder Steuersignal in Abhängigkeit von der Übereinstimmung bzw. Nichtübereinstimmung der vom Auftreffpunkt des Laserstrahls (7) zu durchlaufenden Bildkoordinaten (38) mit vorgegebenen Vergleichskoordinaten auslösbar ist.

## Claims

1. Master-control facility for monitoring operational performance by way of an image screen (3), which is preferably composed of mosaic assembly components (32), for visual imaging of a fixed operational diagram and operational states in spatial association within an operational diagram, and with at least one laserbeam (7) which is aligned by means of an electronically controlled refracting device (50) whilst producing a spot- or line-shaped or surface image (36') of a defined frequency, which is superimposed on the operational diagram (34) and which appears to the human eye to be stationary or moving, being repeatedly and chronologically focussed with defined frequency at a plurality of freely given points of incidence (38) on the image-board surface (3) and converted thereat, whilst producing a visual image (36') in substantially diffusely reflected or emitted light.

2. Master-control facility according to claim 1, **characterised by** a continuously or quasi-continuously operated laser (52) as a source for producing a laserbeam.

3. Master-control facility according to claim 1 or 2, **characterised in that** in the beam path within the refracting device (50̸) are arranged optical means for alignment of the laserbeam (7), which are influenced with respect to their optical density by a the control electronics (10̸).

4. Master-control facility according to one of claims 1 to 3, **characterized in that** the refracting device (50̸) comprises a mirror or a respective prism, the alignment of which is adjustable by way of the control electronics.

5. Master-control facility according to claim 4, **characterized in that** the spatial alignment of the mirror or the prism is adjustable by means of two or three piezo crystals, which are arranged at a distance from each other and controlled by the control electronics.

6. Master-control facility according to claim 4, **characterized in that** the spatial alignment of the mirror or the prism is preferably adjustable by means of electromagnetic means operating by the galvanometer principle.

7. Master-control facility according to one of claims 1 to 6, **characterized in that** the surface of the image board (3) or of the mosaic assembly components (32) which form the image board (3) respectively, are coated with a luminescent material which is activated to emit light by the laserbeam.

8. Master-control facility according to claim 7, **characterized in that** the luminescent material has a phosphorizing effect with an afterglow period of between 0̸.5 and 20̸ seconds.

9. Master-control facility according to one of claims 1 to 8, **characterized in that** image information to be transferred by a laserbeam (7) is transferable from a digital memory of an electronic computer (12) to an electronic refracting device (50̸).

10. Master-control facility according to one of claims 1 to 9**, characterized in that** the control electronics (10̸) comprises a digital data memory for accommodating the image information, and that the image information is sequentially read from the data memory at a specified cycle rate and converted via a signal converter with digital/analog converter into signals for controlling the alignment means for the laserbeam (7).

11. Master-control facility according to claims 1 to 10̸, **characterized in that** the points of incidence (38) of a laserbeam on the image board (3) is movable on a path curve (36') at a given path speed, whereby the path curve (36') is given as a succession of fixed points arranged at a distance from each other and the point of incidence is movable between adjacent fixed points on a preferably straight line which connects the fixed points, and whereby the coordinate values of the fixed points and, if appropriate, further image parameters associated with the fixed points are stored in a digital memory medium, from where they are read by a computer (12) or the control electronics (10̸).

12. Master-control facility according to claim 11, **characterized in that** as additional image parameter a direction vector and/or a speed value and/or an intensity value and/or a colour value and/or a focussing value of a respective image point can be stored in and read out of the digital memory medium.

13. Master-control facility according to one of claims 9 to 12, **characterized in that** the computer (12) and/or the control electronics (10) are loaded with signals from an input unit (14, 16, 18) and/or a master computer (20̸), which are converted by means of computer software and/or the control electronics (10̸) into image informations and signals and transferred true to coordinates to the image board (3) whilst producing a respective image (36').

14. Master-control facility according to one of claims 1 to 13, **characterized in that** sensors which respond to an arriving laserbeam are arranged at specified coordinate locations of the image board (3), by means of which an acknowledgment or control signal is triggered.

15. Master-control facility according to one of claims 9 to 14, **characterised in that** the image-reading or image-producing software of a computer (12) triggers an acknowledgment or control signal in dependence on conformity or non-conformity of image coordinates (38) to be passed through from the points of incidence of laserbeam (7) with given comparative coordinates.

## Revendications

1. Salle de contrôle pour la surveillance de séquences de fonctionnement, comprenant un panneau de visualisation (3) constitué de préférence à partir d'éléments de mosaïque (32) pour la représentation visuelle d'un schéma fonctionnel stationnaire et d'états de fonctionnement en association spatiale à l'intérieur du schéma fonctionnel, ainsi qu'au moins un faisceau laser (7) qui, au moyen d'au moins un dispositif de déviation (50) à commande électronique et avec formation d'une image (36') ponctuelle, linéaire ou bidimensionnelle superposée au schéma fonctionnel (34) et apparaissant à l'oeil humain sous la forme d'une image fixe ou en mouvement, peut être dirigé à répétition, avec une fréquence définie, successivement sur un grand nombre de points d'impact (38) sur la surface (3) du panneau de visualisation pouvant être prédéterminés à volonté, et converti auxdits points d'impact en lumière réfléchie ou émise sensiblement de manière diffuse, avec formation de l'image (36') perceptible visuellement.

2. Salle de contrôle selon la revendication 1, caractérisée en ce qu'elle comprend comme source pour la génération du faisceau laser, un laser (52) fonctionnant en continu ou de manière quasi-continue.

3. Salle de contrôle selon l'une des revendications 1 ou 2, caractérisée en ce que dans la marche des rayons à l'intérieur du dispositif de déviation (50) sont insérés des moyens optiques dont la densité optique peut être modifiée par l'électronique de commande (10) pour l'orientation du faisceau laser (7).

4. Salle de contrôle selon l'une des revendications 1 à 3, caractérisée en ce que le dispositif de déviation (50) comprend un miroir ou un prisme correspondant dont l'orientation peut être réglée par l'électronique de commande.

5. Salle de contrôle selon la revendication 4, caractérisée en ce que l'orientation spatiale du miroir ou du prisme peut être réglée à l'aide de deux ou trois cristaux piézoélectriques disposés à distances les uns par rapport aux autres et pouvant être commandés par l'électronique de commande.

6. Salle de contrôle selon la revendication 4, caractérisée en ce que l'orientation spatiale du miroir ou du prisme peut être réglée avec des moyens électromagnétiques fonctionnant d'après le principe du galvanomètre.

7. Salle de contrôle selon l'une des revendications 1 à 6, caractérisée en ce que la surface du panneau de visualisation (3) et respectivement des éléments mosaïques (32) formant le panneau de visualisation (3) est revêtue d'un matériau luminescent qui peut être excité à l'émission de lumière par le faisceau laser.

8. Salle de contrôle selon la revendication 7, caractérisée en ce que le matériau luminescent a un effet phosphorescent avec une durée de phosphorescence de 0,5 à 20 secondes.

9. Salle de contrôle selon l'une des revendications 1 à 8, caractérisée en ce que l'information d'image à transmettre par le faisceau laser (7) peut être transmise par une mémoire numérique d'un ordinateur (12) au dispositif de déviation électronique (50).

10. Salle de contrôle selon l'une des revendications 1 à 9, caractérisée en ce que l'électronique de commande (10) comprend une mémoire de données numériques pour l'enregistrement des informations d'image, et que les informations d'image peuvent être appelées de manière séquentielle, avec une fréquence de répétition prédéterminée, dans la mémoire de données et transformées par l'intermédiaire d'un convertisseur de signaux avec convertisseur numérique-analogique, en signaux pour la commande des moyens d'orientation pour le faisceau laser (7).

11. Salle de contrôle selon l'une des revendications 1 à 10, caractérisée en ce que les points d'impact (38) du faisceau laser sur le panneau de visualisation (3) peuvent être déplacés sur une trajectoire (36') à une vitesse prédéterminée, la trajectoire (36') étant prédéterminée sous la forme d'une succession de points fixes disposés à distances les uns des autres et le point d'impact entre des points fixes voisins pouvant être déplacé sur une ligne, de préférence une droite, qui relie les points fixes, et les coordonnées des points fixes et éventuellement d'autres paramètres d'image associés aux points fixes pouvant être stockés dans une mémoire numérique d'où ils peuvent être appelés par l'ordinateur (12) ou l'électronique de commande (10)

12. Salle de contrôle selon la revendication 11, caractérisée en ce que comme autres paramètres d'image peuvent être stockés dans la mémoire numérique et appelés dans celle-ci, un vecteur de référence et/ou une vitesse et/ou une intensité et/ou une valeur chromatique et/ou une valeur de focalisation du point d'image considéré.

13. Salle de contrôle selon l'une des revendications 9 à 12, caractérisée en ce que l'ordinateur (12) et/ou l'électronique de commande (10) peuvent recevoir des signaux provenant d'une unité d'entrée (14, 16, 18) et/ou d'un ordinateur pilote (20), lesquels peuvent être convertis, au moyen du logiciel de l'ordinateur et/ou de l'électronique de commande (10), en informations et signaux d'image et transmis avec des coordonnées correctes au panneau de visualisation (3), avec formation d'une image (36') correspondante.

14. Salle de contrôle selon l'une des revendications 1 à 13, caractérisée en ce qu'à des points de coordonnées prédéterminés du panneau de visualisation (3) sont disposés des détecteurs répondant à l'arrivée du faisceau laser 7 par lesquels peut être déclenché un rétrosignal ou signal de commande.

15. Salle de contrôle selon l'une des revendications 9 à 14, caractérisée en ce que le logiciel de lecture ou de génération d'images de l'ordinateur (12) peut déclencher un rétrosignal ou signal de commande en fonction de la concordance ou de la non-concordance des coordonnées (38) de l'image devant être parcourues par le point d'impact du faisceau laser (7) avec des coordonnées de comparaison prédéterminées.
